# EUROPÄISCHE PATENTSCHRIFT

(11) **EP 2 039 541 B1**
(45) Veröffentlichungstag und Bekanntmachung des Hinweises auf die Patenterteilung: **18.03.2015**
(21) Anmeldenummer: 08012559.4
(22) Anmeldetag: 11.07.2008
(51) Int. Cl.: B60G 7/02, B62D 17/00

(54) **Einstellvorrichtung für eine einstellbare Lagerung**
Adjustment device for an adjustable mount
Dispositif de réglage pour un support réglable

(30) Priorität: 21.09.2007 DE 102007045217
(43) Veröffentlichungstag der Anmeldung: 25.03.2009
(73) Patentinhaber: Audi AG, 85045 Ingolstadt (DE)
(72) Erfinder: Seemüller, Wolfgang, 82205 Gilching (DE); Lamers, Stephan, 93336 Altmannstein (DE)
(74) Vertreter: Asch, Konrad

(56) Entgegenhaltungen:
- EP-A- 0 230 485
- EP-B- 0 842 081
- DE-A1- 3 200 836
- DE-C1- 4 206 415
- GB-A- 2 096 075

## Beschreibung

Die Erfindung betrifft eine Einstellvorrichtung für eine einstellbare Lagerung gemäß dem Patentanspruch 1.

Eine Einstellvorrichtung für eine einstellbare Lagerung in Form einer Radaufhängung von Kraftfahrzeugen ist in der DE 42 06 415 C1 beschrieben. Die Einstellvorrichtung umfasst im Wesentlichen einen zwei Schenkel aufweisenden Lagerbock, zwischen denen eine Gelenkachse eines Radführungslenkers angeordnet ist. Die Gelenkachse ist in zwei, in den beiden Schenkel des Lagerbocks fluchtend zueinander angeordneten Langlöchern gelagert. Zwecks einer stufenlos durchführbaren Justierung des Radführungslenkers ist die vorzugsweise durch einen verspannten Schraubenbolzen gebildete Gelenkachse am Umfang verzahnt und kämmt mit zwei Gegenverzahnungen, von denen jeweils eine in eine der einander entsprechenden Längswände der beiden die Gelenkachse aufnehmenden Langlöcher eingeformt ist.

Als nachteilig erweist sich hierbei insbesondere die erforderliche Anbindung des Radführungslenkers zwischen zwei Lagerschenkel, da diese zweischnittige Anbindung verhältnismäßig viel Bauraum benötigt. Zudem ist durch die zweischnittige Anbindung die Montierbarkeit und Freigängigkeit eingeschränkt.

Ein weiterer Nachteil der offenbarten Einstellvorrichtung ist, dass der Verstellvorgang kinematisch relativ aufwendig ist, da bei einem durch eine Drehbewegung des Schraubbolzens bzw. der Gelenkachse initiierten Verstellvorgang der Schraubbolzen bzw. die Gelenkachse auf den Längswänden der Langlöcher abrollt, d.h. dass eine Relativbewegung des Schraubbolzens bzw. der Gelenkachse in Bezug zum Lagerbock stattfindet.

Um eine einwandfreie Funktion der offenbarten Einstellvorrichtung zu gewährleisten ist es zudem erforderlich, dass die Verzahnung des Schraubbolzens bzw. der Gelenkachse in Eingriff mit der Gegenverzahnung an beiden Schenkel des Lagerbocks stehen. Die Konsequenz daraus ist, dass der Schraubbolzen bzw. die Gelenkachse über die gesamte Länge eine Verzahnung benötigt. Dies erweist sich als nachteilig, da im Bereich des ersten Schenkels des Lagerbocks die benötigte Verzahnung im Übergangsbereich Schraubbolzenkopf zu Schaft einen erhöhten Fertigungsaufwand bedingt. Und zum anderen im Bereich des gegenüberliegenden zweiten Schenkels des Lagerbocks zur Sicherstellung einer ausreichenden Gewindelänge die Verwendung eines Schraubbolzens mit einem im Bezug zum Schaftdurchmesser geringeren Gewindedurchmesser erforderlich ist, was wiederum die Verwendung einer Spezialmutter oder zumindest einer Scheibe bedingt.

Der Erfindung liegt die Aufgabe zugrunde, eine Einstellvorrichtung für eine einstellbare Lagerung unter Vermeidung der genannten Nachteile derart weiterzubilden, dass weniger Bauraum benötigt wird und dass eine bessere Montierbarkeit und Freigängigkeit, sowie ein kinematisch einfacher Verstellvorgang gewährleistet ist.

Diese Aufgabe wird durch die Merkmale des Patentanspruches 1 gelöst.

Die Unteransprüche bilden vorteilhafte Weiterbildungen der Erfindung.

Nach der Erfindung umfasst die Einstellvorrichtung für eine einstellbare Lagerung, insbesondere zur Einstellung einer Radaufhängung von Kraftfahrzeugen, ein erstes Einstellelement mit einer Durchgangsöffnung, ein zweites Einstellelement, welches ein Lager mit einem eine Durchgangsbohrung aufweisenden Lagerkern aufweist, und ein die Durchgangsöffnung und Durchgangsbohrung durchfassendes Befestigungselement zur kraftschlüssigen Verbindung des ersten und zweiten Einstellelements, sowie ein Stellmittel, welches in der Durchgangsbohrung des Lagerkerns des Lagers des zweiten Einstellelements geführt ist und mittels Formschluss mit dem Lagerkern des Lagers des zweiten Einstellelements in Wirkverbindung steht. Das Stellmittel weist eine Außenverzahnung auf und die Durchgangsbohrung im Lagerkern des Lagers des zweiten Einstellelements ist als eine an einer Flankenseite eine Innenverzahnung aufweisende Langlochbohrung ausgebildet, sodass durch eine Verdrehen des Stellmittels eine Relativbewegung des zweiten Einstellelements in Bezug zu dem ersten Einstellelement bewirkbar ist. Um während eines Einstellvorgangs ein ungewolltes Verdrehen des Lagerkerns des Lagers des zweiten Einstellelements zu vermeiden, ist der Lagerkern des Lagers des zweiten Einstellelements verdrehsicher am ersten Einstellelement, insbesondere durch Ausbildung einer Parallelführung zwischen dem Lagerkern des Lagers des zweiten Einstellelements und dem ersten Einstellelement, angeordnet.

Der große Vorteil besteht nun darin, dass durch die erfindungsgemäßen Maßnahmen der Verstellmechanismus in den Lagerkern des Lagers des zweiten Einstellelements verlagert ist. Die Konsequenz daraus ist eine weniger Bauraum beanspruchende Konstruktion, da zur Festlegung des zweiten Einstellelements am ersten Einstellelement lediglich eine einschnittige Verbindung erforderlich ist. Damit verbunden ist eine vereinfachte Montierbarkeit und eine bessere Freigängigkeit.

Vorteilhaft ist zudem, dass bei einem mittels einer Verdrehung des Stellmittels initiierten Verstellvorgang lediglich der Lagerkern des Lagers des zweiten Einstellelements relativ zu dem ersten Einstellelement bewegt wird, sodass eine einfache Kinematik des Verstellvorgangs und eine optimale Führung und somit eine vereinfachte Einstellung des Lagerkerns beim Verstellen gewährleistet ist.

Ein weiterer Vorteil besteht darin, dass durch die erfindungsgemäßen Maßnahmen ein großflächiger Formschluss vorliegt und ein Verkanten des Lagerkerns des Lagers des zweiten Einstellelements während eines Einstellvorgangs ausgeschlossen ist. Weiterhin ist ein Nachrüsten ohne kostspielige Änderungen von komplexen Bauteilen möglich.

Nach einer ersten Ausführungsform sind das Stellmittel und das Befestigungsmittel als eine Baueinheit ausgebildet. D. h. die Baueinheit aus Stellmittel und Befestigungsmittel befindet sich sowohl in Formschluss mit dem Lagerkern des Lagers des zweiten Einstellelements als auch im Kraftschluss mit dem ersten Einstellelement. Durch diese Merkmale ist in vorteilhafter Weise eine Gewichtsreduzierung und eine Bauteileinsparung realisiert.

Gemäß einer zweiten Ausführungsform ist das Stellmittel als eine das Befestigungselement umschließende Hülse ausgebildet. Dies hat den Effekt, dass eine kostengünstige Fertigung des Stellmittels, beispielsweise in Form eines Fließpressteils, ermöglicht ist und als Befestigungselement eine Normschraube einsetzbar ist.

Gemäß einer weiteren Ausführungsform der erfindungsgemäßen Einstellvorrichtung ist das erste Einstellelement als ein zwei Lagerschenkel aufweisender Lagerbock ausgebildet. Jede der beiden Lagerschenkel weist hierbei eine Durchgangsöffnung auf und der Lagerkern des Lagers des zweiten Einstellelements ist zwischen den beiden Lagerschenkel des Lagerbocks angeordnet. Steht genügend Bauraum zur Verfügung ist durch diese Merkmale in vorteilhafter Weise eine äußerst stabile Ausbildung der erfindungsgemäßen Einstelleinrichtung gewährleistet.

Zur Herstellung der kraftschlüssigen Verbindung zwischen dem ersten und zweiten Einstellelement ist das Befestigungselement vorzugsweise als ein Schraubbolzen ausgebildet und der aus der Durchgangsöffnung des ersten Einstellelements hinausreichende Bereich des Schraubbolzens ist mit einer Mutter verschraubt. Ist das erste Einstellelement als ein zwei Lagerschenkel aufweisender Lagerbock ausgebildet, ist entsprechend lediglich der aus einem der Lagerschenkel, d. h. der aus der zugehörigen Durchgangsöffnung hinausreichende Bereich mit der Mutter verschraubt.

Im Falle der Ausbildung des Stellmittels als eine das Befestigungselement umschließende Hülse ist alternativ die Durchgangsöffnung in dem ersten Einstellelement mit einem entsprechenden Innengewinde versehen. Bei der zweischneidigen Ausführungsform, d. h. der Ausbildung des ersten Einstellelements als ein zwei Lagerschenkel aufweisender Lagerbock, weist nur eine Durchgangsöffnung in einem der beiden Lagerschenkel ein entsprechendes Innengewinde zur Verschraubung des Schraubbolzens auf. In vorteilhafter Weise ist dadurch die kraftschlüssige Verbindung zwischen zweiten Einstellelement und ersten Einstellelement durch ein "einfaches Einschrauben" des Schraubbolzens in das erste Einstellelement realisierbar, d. h. auf die Verwendung einer Mutter kann in diesem Fall verzichtet werden.

Vorzugsweise weist das Stellmittel in axiale Richtung betrachtet lediglich in dem von dem Lagerkern des Lagers des zweiten Einstellelements umfassten Bereich eine Außenverzahnung auf. D. h. in axiale Richtung betrachtet entspricht die Länge der Außenverzahnung lediglich der Breite des Lagerkerns des Lagers des zweiten Einstellelements. Denkbar ist natürlich auch, dass in axiale Richtung betrachtet das Stellmittel eine Außenverzahnung aufweist, deren Länge kleiner als die Breite des Lagerkerns des Lagers des zweiten Einstellelements ist. Die Beschränkung der Länge der Außenverzahnung hat den Vorteil, dass hierdurch lediglich eine geringe axiale Länge des Stellmittels mit der Außenverzahnung versehen ist, d. h. dass am Stellmittel in axiale Richtung betrachtet ausreichend Bauraum zur Ausbildung der erforderlichen Mittel für eine Realisierung der kraftschlüssige Verbindung zwischen ersten und zweiten Einstellelement zur Verfügung steht.

In vorteilhafter Weise ist die Außenverzahnung des Stellmittels auf einen Umfangsbereich begrenzt, d. h. lediglich der der Innenverzahnung zugewandte Umfangsbereich des Stellmittels ist mit der Außenverzahnung versehen. Dies hat den Effekt, dass ein einfacherer Verstellvorgang, also ein vereinfachtes Gleiten auf der zahnlosen Flanke der Langlochbohrung, gewährleistet ist. Selbstverständlich kann, beispielsweise aus Fertigungsgründen, das Stellmittel auch über den gesamten Umfang mit der Außenverzahnung versehen sein.

Vorzugsweise ist an dem Stellmittel eine Kraftangriffsfläche, beispielsweise in Form eines Sechskant, für ein Einstellwerkzeug ausgebildet.

In vorteilhafter Weise ist der Lagerkern als ein Strangpressteil ausgebildet. Hierdurch ist eine kostengünstige Fertigung gewährleistet.

In vorteilhafterweise ist die Lagerart des Lagers des zweiten Einstellelements beliebig. Das Lager kann beispielsweise ein Gummi-Metalllager, Kugelgelenk, ein Scharniergelenk oder im Extremfall ein starrer Körper mit einer Langlochbohrung sein.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden anhand den in der Zeichnung dargestellten Ausführungsbeispielen näher beschrieben.

In der Beschreibung, in den Patentansprüchen, in der Zusammenfassung und in der Zeichnung werden die in der unten aufgeführten Liste der Bezugszeichen verwendeten Begriffe und zugeordnete Bezugszeichen verwendet. In der Zeichnung bedeuten:
- Fig. 1: eine Explosionsdarstellung einer ersten Ausführungsform der erfindungsgemäßen Einstellvorrichtung;
- Fig. 2: eine perspektive Darstellung der Einstellvorrichtung aus Fig. 1 im Teilschnitt;
- Fig. 3: die Einstellvorrichtung aus Fig. 1 in einer Schnittdarstellung;
- Fig. 4: eine weitere Schnittdarstellung der Einstelleinrichtung aus Fig. 1;
- Fig. 5: eine perspektive Darstellung der Einstellvorrichtung aus Fig. 1 im montierten Zustand;
- Fig. 6: eine Explosionsdarstellung einer zweiten Ausführungsform der erfindungsgemäßen Einstellvorrichtung;
- Fig. 7: eine perspektive Darstellung der Einstellvorrichtung aus Fig. 6 im Teilschnitt;
- Fig. 8: die Einstellvorrichtung aus Fig. 6 in einer Schnittdarstellung;
- Fig. 9: eine weitere Schnittdarstellung der Einstelleinrichtung aus Fig. 6;
- Fig. 10: eine perspektive Darstellung der Einstellvorrichtung aus Fig. 6 im montierten Zustand;
- Fig. 11: eine Explosionsdarstellung einer dritten Ausführungsform der erfindungsgemäßen Einstellvorrichtung;
- Fig. 12: eine perspektive Darstellung der Einstellvorrichtung aus Fig. 11 im Teilschnitt;
- Fig. 13: die Einstellvorrichtung aus Fig. 11 in einer Schnittdarstellung;
- Fig. 14: eine weitere Schnittdarstellung der Einstelleinrichtung aus Fig. 11;
- Fig. 15: eine perspektive Darstellung der Einstellvorrichtung aus Fig. 11 im montierten Zustand;
- Fig. 16: eine Explosionsdarstellung einer vierten Ausführungsform der erfindungsgemäßen Einstellvorrichtung;
- Fig. 17: eine perspektive Darstellung der Einstellvorrichtung aus Fig. 16 im Teilschnitt;
- Fig. 18: die Einstellvorrichtung aus Fig. 16 in einer Schnittdarstellung;
- Fig. 19: eine weitere Schnittdarstellung der Einstelleinrichtung aus Fig. 16, und
- Fig. 20: eine perspektive Darstellung der Einstellvorrichtung aus Fig. 16 im montierten Zustand.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

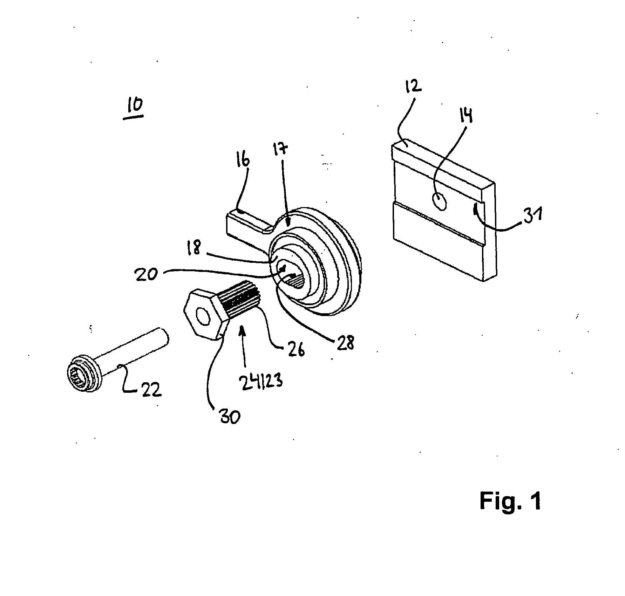

Fig. 1 zeigt mehr oder minder schematisch in einer Explosionsdarstellung eine insgesamt mit der Bezugsziffer 10 bezeichnete Einstellvorrichtung für eine einstellbare Lagerung. Vorliegend ist die einstellbare Lagerung 10 Teil einer Radaufhängung eines Kraftfahrzeugs.

Die Einstellvorrichtung 10 umfasst als ein erstes Einstellelement ein an einem Kraftfahrzeug festgelegtes Halteelement 12 mit einer Durchgangsöffnung 14. Als zweites Einstellelement weist die Einstellvorrichtung 10 einen Radführungslenker 16 auf. Der Radführungslenker 16 weist ein Gummi-Metall-Lager 17 mit einem eine Durchgangsbohrung 20 aufweisenden Lagerkern 18 auf.

Mittels eines die Durchgangsbohrung 20 des Lagerkerns 18 des Lagers 17 durchfassenden Schraubbolzens 22 ist der Radführungslenker 16 kraftschlüssig mit dem Halteelement 12 verbindbar. Hierzu ist der Schraubbolzen 22 in die ein Innengewinde aufweisende Durchgangsöffnung 14 des Halteelements 12 einschraubbar.

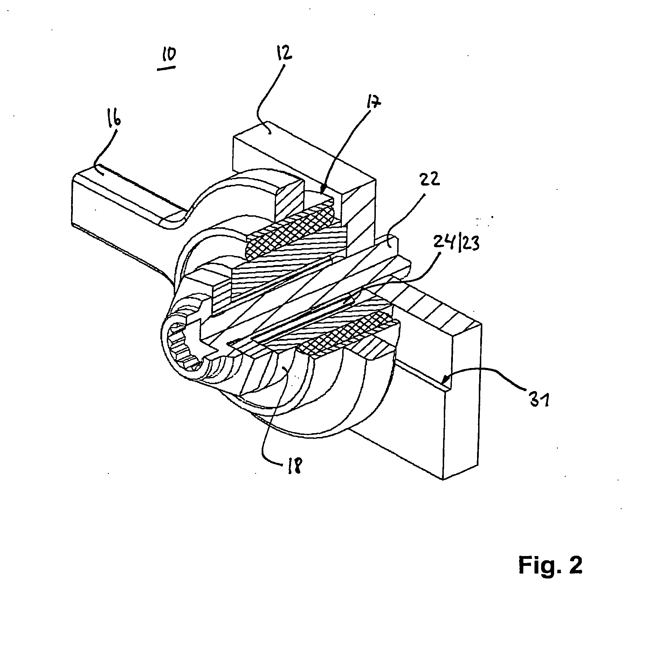

In der Durchgangsbohrung 20 des Lagerkerns 18 des Lagers 17 ist ein Stellmittel 23 geführt. Das Stellmittel 23 ist vorliegend als eine den Schraubbolzen 22 umfassende Hülse 24 ausgebildet, vgl. Fig. 2.

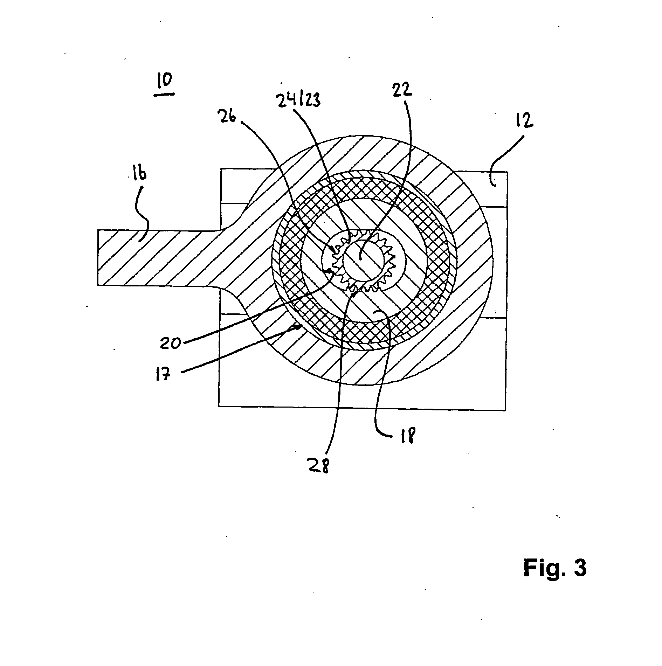

Die Hülse 24 weist eine Außenverzahnung 26 auf und steht in Formschluss mit dem Lagerkern 18 des Lagers 17 des Radführungslenkers 16. Für die Ausbildung des Formschlusses zwischen Hülse 24 und Lagerkern 18 des Lagers 17 des Radführungslenkers 16 ist, wie insbesondere Fig. 3 zu entnehmen ist, die Durchgangsbohrung 20 in dem Lagerkern 18 des Lagers 17 des Radführungslenkers 16 als eine an einer Flankenseite eine Innenverzahnung 28 aufweisende Langlochbohrung 20 ausgebildet. D.h. die Außenverzahnung 26 der Hülse 24 kämmt mit der in einer Flankenseite der Langlochbohrung 20 eingebrachten Innenverzahnung 28.

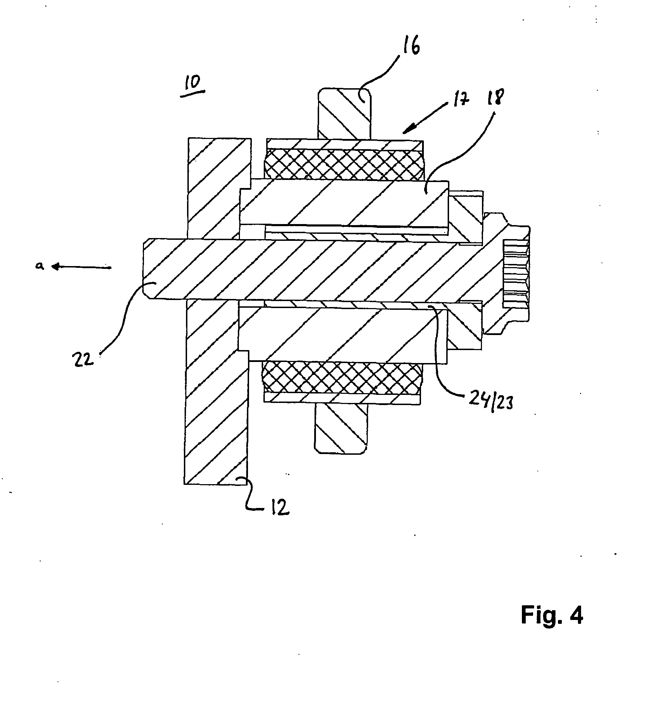

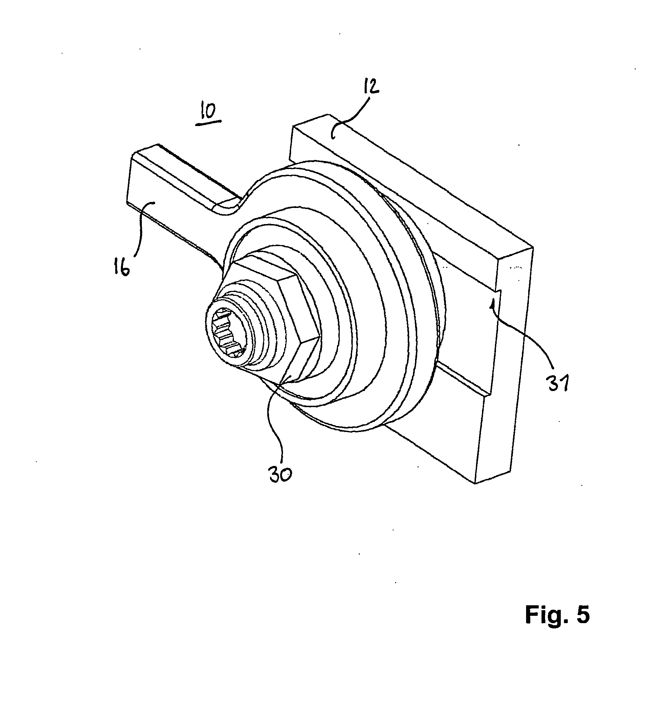

Wie insbesondere aus Fig. 4 ersichtlich ist, weist die Hülse 24 an ihrem dem Halteelement 12 gegenüberliegenden Ende einen topfförmig ausgebildeten, auf dem Lagerkern 18 aufliegenden, Bereich auf. Dieser Bereich übernimmt über die Anlagefläche zwischen Lagerkernstirnseite und Schraubbolzen 22 die Funktion einer Unterlegscheibe. Zudem sind, wie Fig. 1 und insbesondere auch Fig. 5 zu entnehmen ist, am topfförmig ausgebildete Bereich der Hülse 24 Kraftangriffsflächen 30 für ein Einstellwerkzeug ausgebildet.

Weiterhin ist zwischen Halteelement 12 und Radführungslenker 16 eine Verdrehsicherheit in Form einer Parallelführung 31 ausgebildet, vgl. Fig. 2 und Fig. 5.

Nach Lösen der kraftschlüssigen Verbindung zwischen Halteelement 12 und Radführungslenker 16 ist nun der Verstellvorgang durch ein Drehen der Hülse 24 über ein außen an die Kraftangriffsfläche 30 ansetzbares Einstellwerkzeug initiierbar. Hierdurch wird über den Formschluss zwischen Außenverzahnung 26 der Hülse 24 und der Innenverzahnung 28 in einer Flanke der Langlochbohrung 20 lediglich der Lagerkern 18 des Lagers 17 und damit der Radführungslenker 16 in Richtung des Langlochs vorschoben.

Neben dem nunmehr kinematisch einfachen Verstellvorgang erweist sich bei dieser Ausführungsform der erfindungsgemäßen Einstellvorrichtung insbesondere als vorteilhaft, dass eine Achseinstellmöglichkeit an einer einschnittig angebundenen Lagerstelle möglich ist und aufgrund der Ausbildung des Stellmittels als eine das Befestigungselement umfassende Hülse keine Sonderschraube verwendet werden muss.

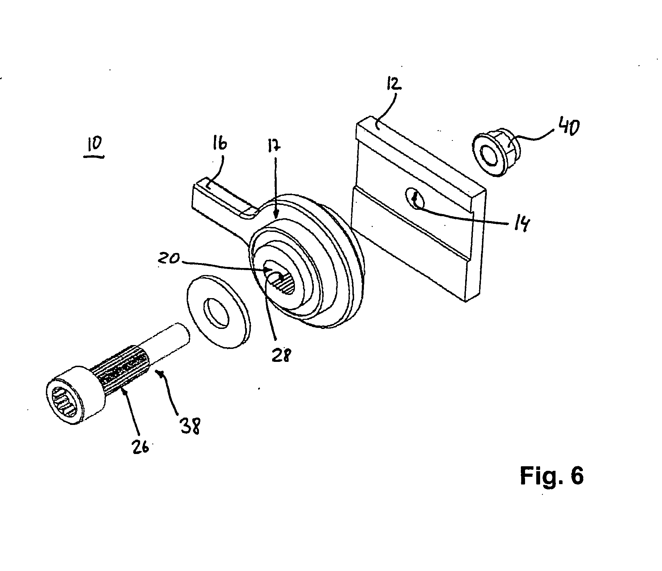

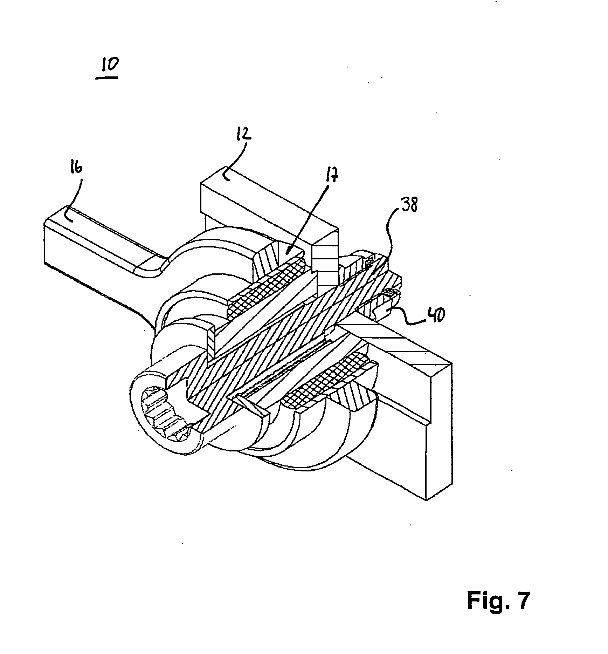

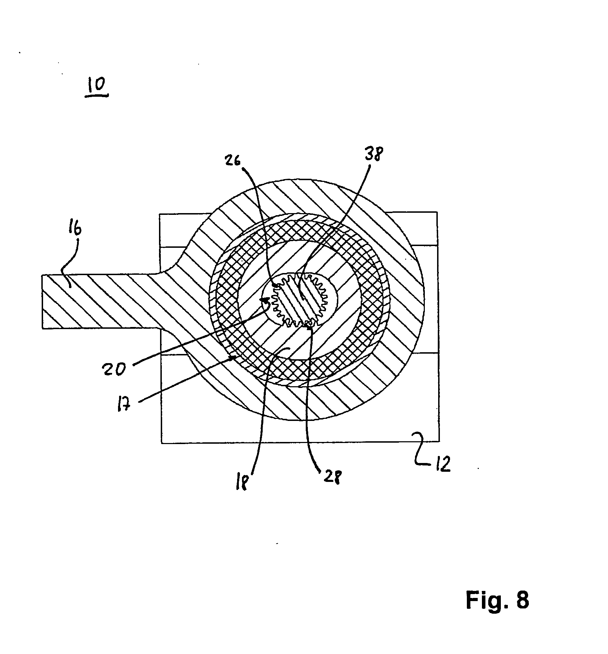

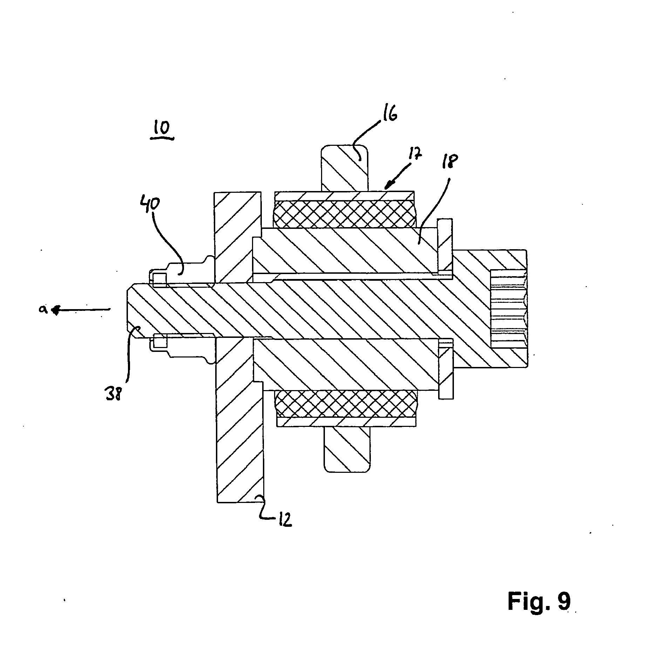

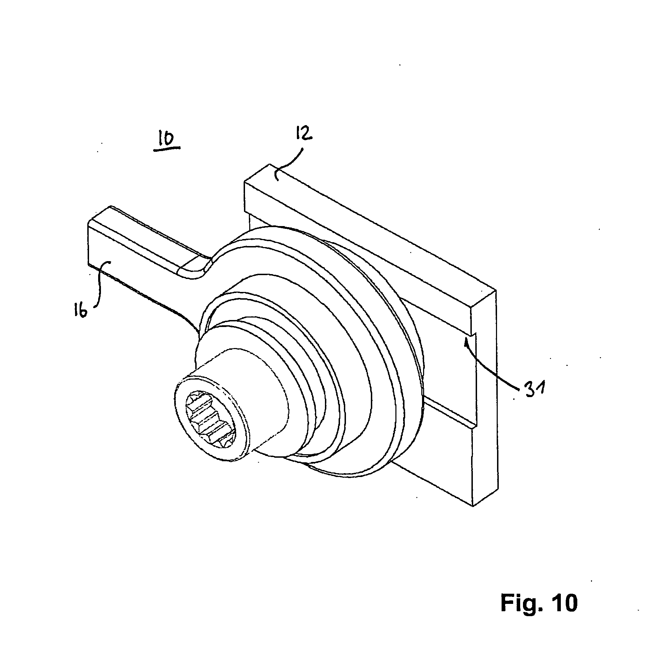

Eine weitere Ausführungsform der erfindungsgemäßen Einstellvorrichtung 10 ist in Fig. 6 bis 10 dargestellt.

Im Gegensatz zu der eingangs beschriebenen Ausführungsform sind hier das Stellmittel 23 und der Schraubbolzen 22 als eine Baueinheit 38 ausgebildet, d.h. die Baueinheit 38 steht über ihre Außenverzahnung 26 sowohl in Formschluss mit der Innenverzahnung 28 des Lagerkerns 18 des Lagers 17 des Radführungslenkers 16 und dient der kraftschlüssigen Verbindung mit dem Halteelement 12.

Weiterhin ist bei dieser zweiten Ausführungsform zur Herstellung der kraftschlüssigen Verbindung der aus der Durchgangsöffnung 14 des Halteelements 12 hinausreichende Bereich der Baueinheit 38 mittels einer Mutter 40 verschraubt.

Da die Baueinheit 38 in axiale Richtung a betrachtet lediglich im dem von dem Lagerkern 18 des Lagers 17 des Radführungslenkers 16 umfassten Bereich die Außenverzahnung 26 aufweist, steht ein ausreichender Übergangsbereich bis zur Ausbildung des Gewindes zur Verfügung.

Der Verstellvorgang ist nach Lösen der Mutter 40 durch ein Verdrehen der Baueinheit 38 initiierbar und bewirkt eine Verstellung des Radführungslenkers 16 in der bereits beschriebenen Art und Weise.

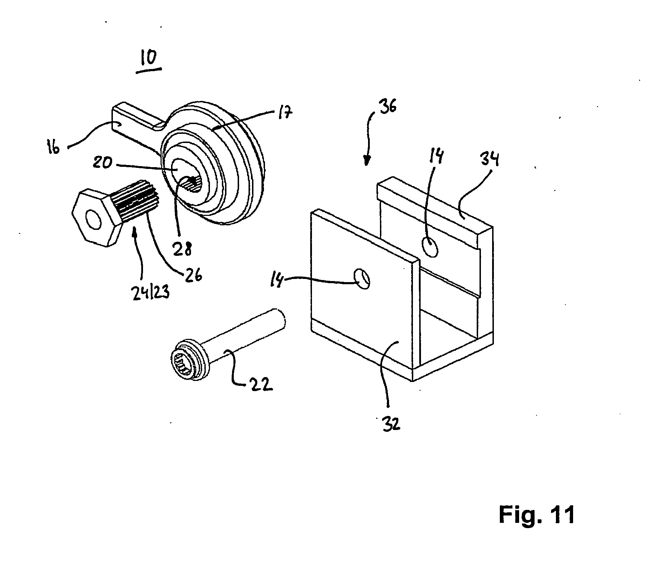

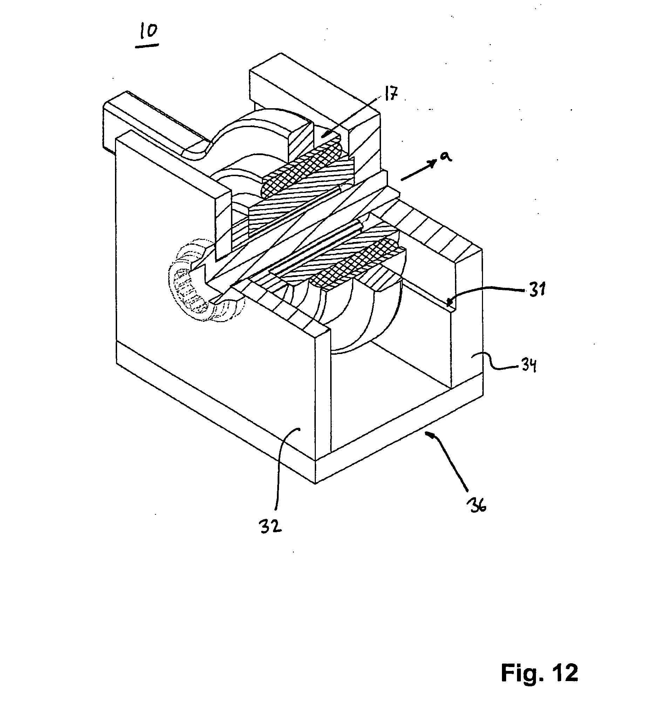

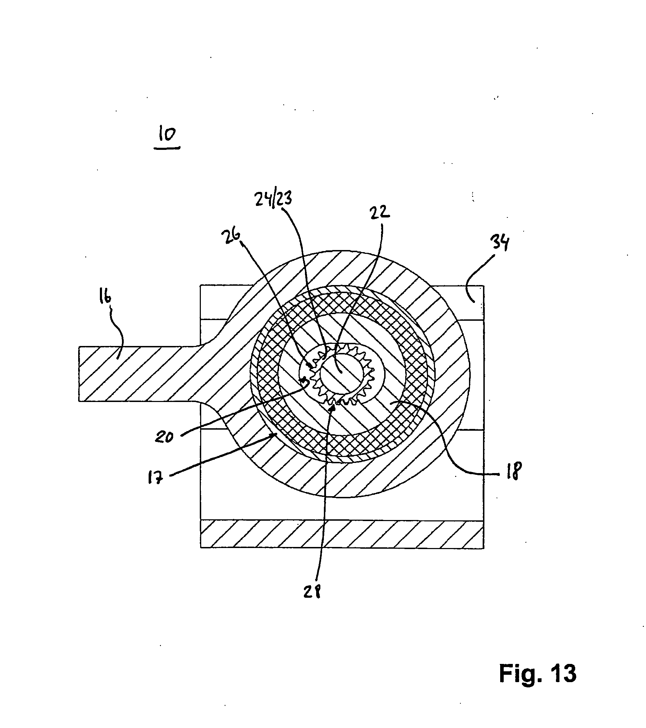

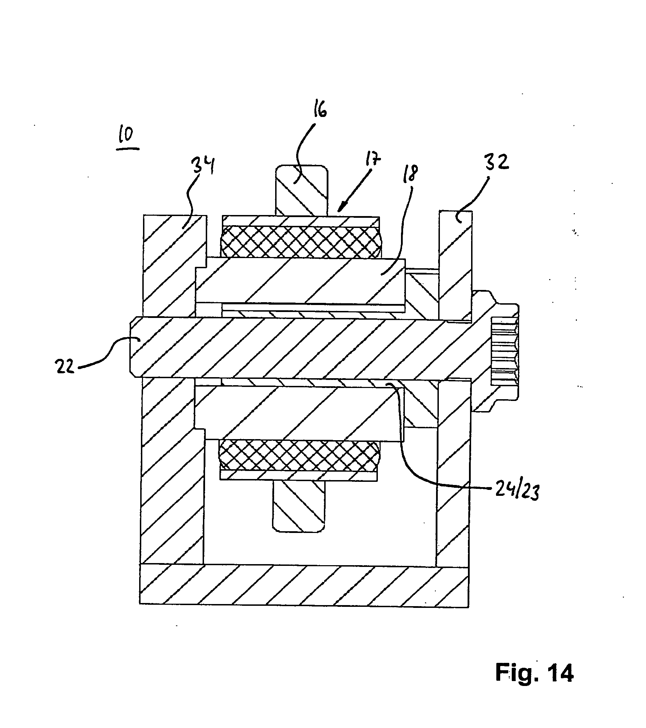

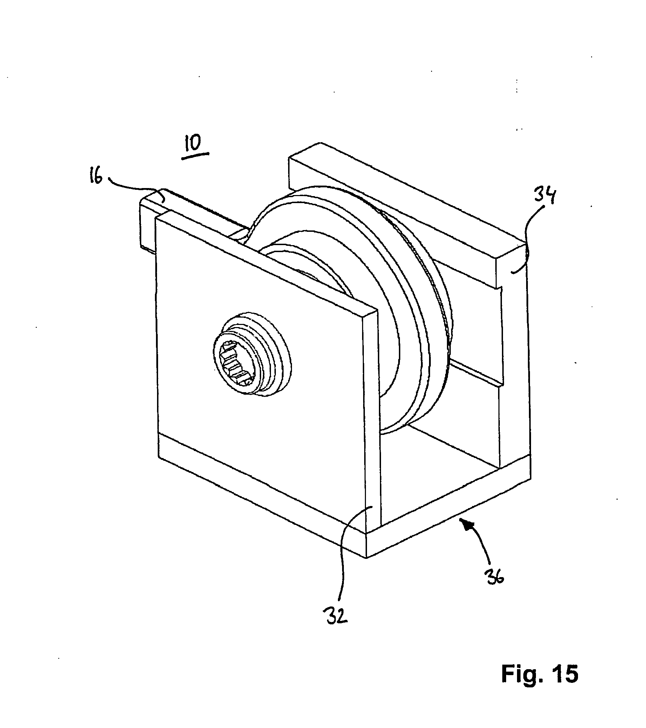

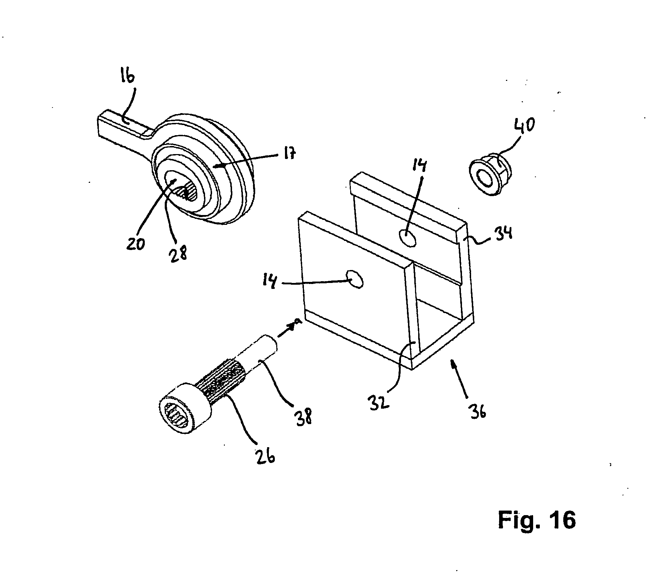

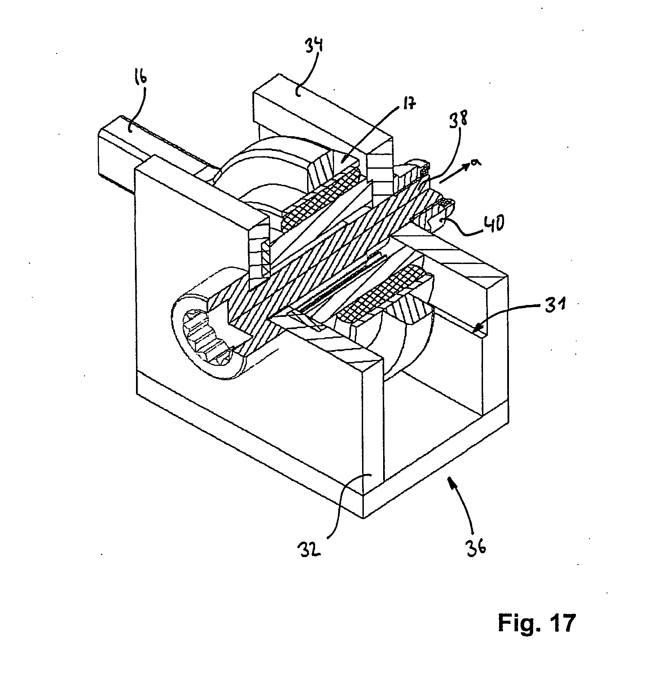

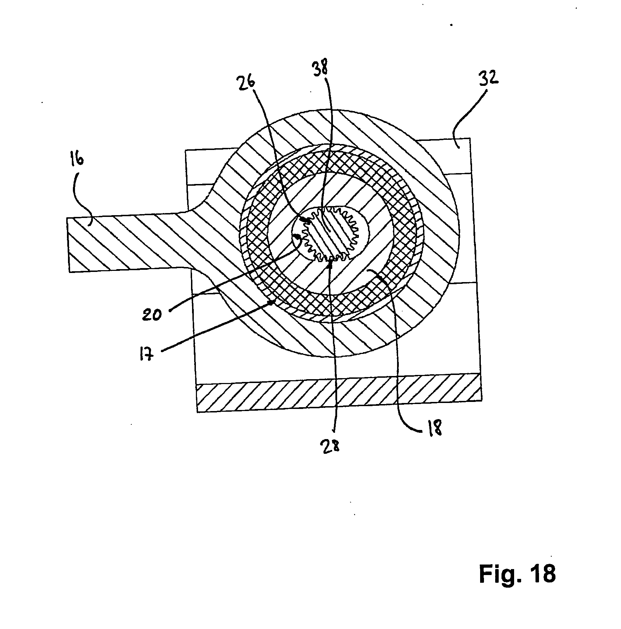

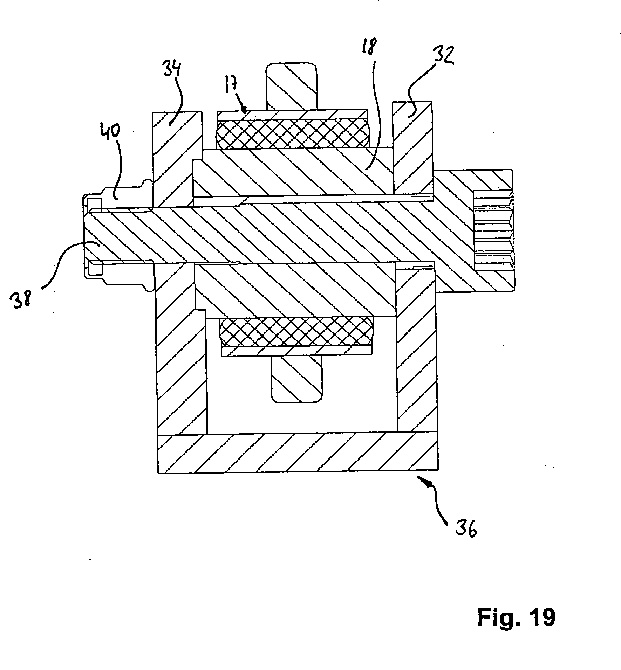

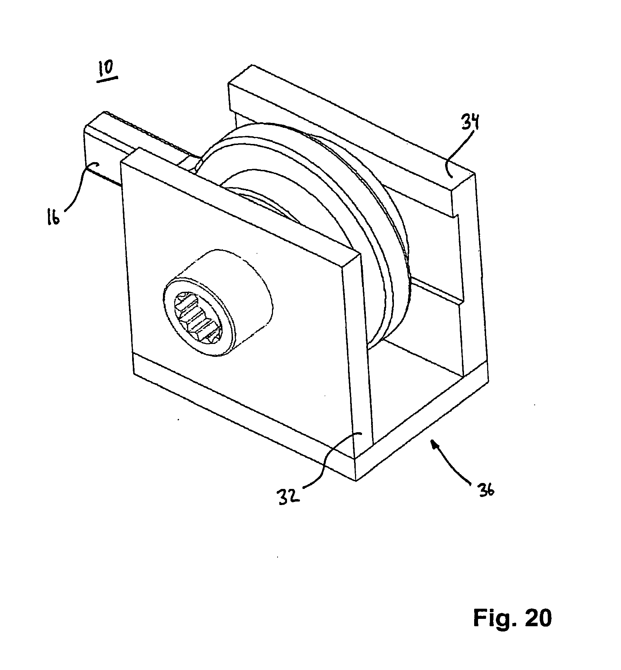

Weitere Ausführungsformen der erfindungsgemäßen Einstellvorrichtung 10 sind in den Fig. 11 bis 15 und 16 bis 20 dargestellt.

Im Gegensatz zu den in den Fig. 1 bis 5 bzw. Fig. 6 bis 10 beschriebenen Ausführungsformen ist hier das Halteelement 12 als ein einen ersten und zweiten Lagerschenkel 32, 34 aufweisender Lagerbock 36 ausgebildet und der Radführungslenker 16, d.h. der Lagerkern 18 des Lagers 17 des Lenkers 16 ist zwischen dem ersten und zweiten Lagerschenkel 32, 34 des Lagerbocks 36 angeordnet.

Der Verstellvorgang ist jeweils in der bereits beschriebenen Art und Weise durchführbar.

### BEZUGSZEICHENLISTE

- 10: Einstellvorrichtung
- 12: erstes Einstellelement/Halteelement
- 14: Durchgangsöffnung
- 16: zweites Einstellelement/Radführungslenker
- 17: Lager/Gummi-Metall-Lager
- 18: Lagerkern
- 20: Durchgangsbohrung/Langlochbohrung
- 22: Schraubbolzen
- 23: Stellmittel
- 24: Hülse
- 26: Außenverzahnung
- 28: Innenverzahnung
- 30: Kraftangriffsflächen
- 31: Parallelführung
- 32: erster Lagerschenkel
- 34: zweiter Lagerschenkel
- 36: Lagerbock
- 38: Baueinheit
- 40: Mutter

- a: axiale Richtung

## Patentansprüche

1. Einstellvorrichtung (10) für eine einstellbare Lagerung, umfassend
- ein erstes Einstellelement (12) mit einer Durchgangsöffnung (14),
- ein zweites Einstellelement (16) mit einem Lager (17) mit einem eine Durchgangsbohrung (20) aufweisenden Lagerkern (18),
- ein die Durchgangsöffnung (14) und die Durchgangsbohrung (20) durchfassendes Befestigungselement (22) zur kraftschlüssigen Verbindung des ersten und zweiten Einstellelements (12, 16))
- ein Stellmittel (23, 24), welches in der Durchgangsbohrung (20) des Lagerkerns (18) des Lagers (17) des zweiten Einstellelements (16) geführt ist, wobei das Stellmittel (23, 24) eine Außenverzahnung (26) aufweist, sodass durch eine Verdrehen des Stellmittels (23, 24) eine Relativbewegung des zweiten Einstellelements (16) in Bezug zu dem ersten Einstellelement (12) bewirkbar ist, **dadurch gekennzeichnet, dass** das Stellmittel (23, 24) mittels Formschluss mit dem Lagerkern (18) des Lagers (17) des zweiten Einstellelements (16) in Wirkverbindung steht, wobei die Durchgangsbohrung (20) im Lagerkern (18) des Lagers (17) des zweiten Einstellelements (16) als eine an einer Flankenseite eine Innenverzahnung (28) aufweisende Langlochbohrung ausgebildet ist, und dass der Lagerkern (18) des Lagers (17) des zweiten Einstellelements (16) verdrehsicher am ersten Einstellelement (12) angeordnet ist.

2. Einstelleinrichtung nach Anspruch 1, **dadurch gekennzeichnet, dass** das Stellmittel (23) und das Befestigungselement (22) als eine Baueinheit (38) ausgebildet sind.

3. Einstelleinrichtung nach Anspruch 1, **dadurch gekennzeichnet, dass** das Stellmittel (23) als eine das Befestigungselement (22) umschließende Hülse (24) ausgebildet ist.

4. Einstelleinrichtung nach Anspruch 2 oder 3, **dadurch gekennzeichnet, dass** das erste Einstellelement (12) als ein zwei Lagerschenkel (32, 34) mit jeweils einer Durchgangsöffnung (14) aufweisender Lagerbock (36) ausgebildet ist und dass der Lagerkern (18) des Lagers (17) des zweiten Einstellelements (16) zwischen den beiden Lagerschenkel (32, 34) des Lagerbocks (36) angeordnet ist.

5. Einstelleinrichtung nach einem der Ansprüche 1 bis 3, **dadurch gekennzeichnet, dass** das Befestigungselement (22) als ein Schraubbolzen ausgebildet ist, dessen aus der Durchgangsöffnung (14) des ersten Einstellelements (12) hinausreichende Bereich mit einer Mutter (40) verschraubt ist.

6. Einstelleinrichtung nach Anspruch 4, **dadurch gekennzeichnet, dass** das Befestigungselement (22) als ein Schraubbolzen ausgebildet ist, dessen aus der Durchgangsöffnung (14) eines der Lagerschenkel (32, 34) hinausreichende Bereich mit einer Mutter (40) verschraubt ist.

7. Einstelleinrichtung nach Anspruch 3, **dadurch gekennzeichnet, dass** das Befestigungselement (22) als ein Schraubbolzen ausgebildet ist, und die Durchgangsöffnung (14) des ersten Einstellelements (12) ein entsprechendes Innengewinde zur Verschraubung des Schraubbolzens aufweist.

8. Einstelleinrichtung nach Anspruch 3 und 4, **dadurch gekennzeichnet, dass** das Befestigungselement (22) als ein Schraubbolzen ausgebildet ist, und lediglich eine Durchgangsöffnung (14) in einem der beiden Lagerschenkel (34, 36) des Lagerbocks (36) ein entsprechendes Innengewinde zur Verschraubung des Schraubbolzens aufweist.

9. Einstelleinrichtung nach einem der vorgenannten Ansprüche, **dadurch gekennzeichnet, dass** das Stellmittel (23) in axiale Richtung (a) betrachtet lediglich in einem von dem Lagerkern (18) des Lagers (17) des zweiten Einstellelements (16) umfassten Bereich mit der Außenverzahnung (26) versehen ist.

10. Einstelleinrichtung nach einem der vorgenannten Ansprüche, **dadurch gekennzeichnet, dass** das Stellmittel (23, 24) lediglich in einem begrenzten Umfangsbereich mit der Außenverzahnung (26) versehen ist.

11. Einstelleinrichtung nach einem der vorgenannten Ansprüche, **dadurch gekennzeichnet, dass** die Verdrehsicherheit zwischen Lagerkern (18) des Lagers (17) des zweiten Einstellelements (16) und ersten Einstellelement (12) als eine Parallelführung (31) ausgebildet ist.

12. Einstelleinrichtung nach einem der vorgenannten Ansprüche, **dadurch gekennzeichnet, dass** an dem Stellmittel (23) eine Kraftangriffsfläche (30) für ein Einstellwerkzeug ausgebildet ist.

13. Einstelleinrichtung nach einem der vorgenannten Ansprüche, **dadurch gekennzeichnet, dass** der Lagerkern (18) des Lagers (17) des zweiten Einstellelements (16) als ein Strangpressteil ausgebildet ist.

14. Einstelleinrichtung nach Anspruch 3, **dadurch gekennzeichnet, dass** die Hülse (24) als ein Fließpressteil ausgebildet ist.

15. Einstelleinrichtung nach einem der vorgenannten Ansprüche, **dadurch gekennzeichnet, dass** das Lager (17) des zweiten Einstellelements (16) als ein Gummi-Metalllager, ein Kugelgelenk, ein Scharniergelenk, oder ein eine Langlochbohrung (20) aufweisender starrer Körper ausgebildet ist.

## Claims

1. Adjustment apparatus (10) for an adjustable mount, comprising
- a first adjustment element (12) having a through-opening (14),
- a second adjustment element (16) that comprises a bearing (17) having a bearing core (18) comprising a through-hole (20),
- a fastening element (22) that reaches through the through-opening (14) and the through-hole (20) for non-positively connecting the first and second adjustment elements (12, 16),
- an actuating means (23, 24) which is guided in the through-hole (20) in the bearing core (18) of the bearing (17) of the second adjustment element (16), the actuating means (23, 24) having external teeth (26) so that the second adjustment element (16) can move relative to the first adjustment element (12) when the actuating means (23, 24) is twisted, **characterised in that** the actuating means (23, 24) is operatively connected to the bearing core (18) of the bearing (17) of the second adjustment element (16) in an interlocking manner, the through-hole (20) in the bearing core (18) of the bearing (17) of the second adjustment element (16) being designed as an elongate hole that comprises internal teeth (28) on one side face, and **in that** the bearing core (18) of the bearing (17) of the second adjustment element (16) is arranged on the first adjustment element (12) such that it cannot twist.

2. Adjustment device according to claim 1, **characterised in that** the actuating means (23) and the fastening element (22) are formed as one unit (38).

3. Adjustment device according to claim 1, **characterised in that** the actuating means (23) is designed as a sleeve (24) that surrounds the fastening element (22).

4. Adjustment device according to either claim 2 or claim 3, **characterised in that** the first adjustment element (12) is designed as a bearing block (36) comprising two bearing limbs (32, 34) each having a through-opening (14), and **in that** the bearing core (18) of the bearing (17) of the second adjustment element (16) is arranged between the two bearing limbs (32, 34) of the bearing block (36).

5. Adjustment device according to any of claims 1 to 3, **characterised in that** the fastening element (22) is designed as a bolt, the region thereof that extends out of the through-opening (14) in the first adjustment element (12) having a nut (40) screwed thereto.

6. Adjustment device according to claim 4, **characterised in that** the fastening element (22) is designed as a bolt, the region thereof that extends out of the through-opening (14) in one of the bearing limbs (32, 34) having a nut (40) screwed thereto.

7. Adjustment device according to claim 3, **characterised in that** the fastening element (22) is designed as a bolt and the through-opening (14) in the first adjustment element (12) comprises a corresponding female thread for screwing in the bolt.

8. Adjustment device according to claims 3 and 4, **characterised in that** the fastening element (22) is designed as a bolt and only one through-opening (14) in one of the two bearing limbs (34, 36) of the bearing block (36) has a corresponding female thread for screwing in the bolt.

9. Adjustment device according to any of the preceding claims, **characterised in that,** when viewed in the axial direction (a), the actuating means (23) is only provided with external teeth (26) in a region that is surrounded by the bearing core (18) of the bearing (17) of the second adjustment element (16).

10. Adjustment device according to any of the preceding claims, **characterised in that** the actuating means (23, 24) is only provided with external teeth (26) in a restricted peripheral region.

11. Adjustment device according to any of the preceding claims, **characterised in that** a parallel guide (31) provides protection against twisting between the bearing core (18) of the bearing (17) of the second adjustment element (16) and of the first adjustment element (12).

12. Adjustment device according to any of the preceding claims, **characterised in that** a force-application surface (30) for an adjustment tool is formed on the actuating means (23).

13. Adjustment device according to any of the preceding claims, **characterised in that the** bearing core (18) of the bearing (17) of the second adjustment element (16) is formed as an extruded part.

14. Adjustment device according to claim 3, **characterised in that** the sleeve (24) is formed as a flow-moulded part.

15. Adjustment device according to any of the preceding claims, **characterised in that** the bearing (17) of the second adjustment element (16) is designed as a rubber-metal bearing, a ball-and-socket joint, a hinge joint or a rigid body comprising an elongate hole (20).

## Revendications

1. Dispositif de réglage (10) pour un support réglable, comprenant :
- un premier élément de réglage (12) avec une ouverture de passage (14),
- un second élément de réglage (16) avec un palier (17) comportant une âme de palier (18) présentant l'alésage de passage (20),
- un élément de fixation (22) traversant l'ouverture de passage (14) et l'alésage de passage (20) pour lier solidement les premier et second éléments de réglage (12, 16),
- un élément de commande (23, 24), qui est guidé dans l'alésage de passage (20) de l'âme (18) du palier (17) du second élément de réglage (16), dans lequel l'élément de commande (23, 24) présente une denture externe (26) de sorte que, par rotation de l'élément de commande (23, 24), il puisse se produire un mouvement relatif du second élément de réglage (16) par rapport au premier élément de réglage (12), **caractérisé en ce que** l'élément de commande (23, 24) coopère, par adaptation de formes, avec l'âme (18) du palier (17) du second élément de réglage (16), dans lequel l'alésage de passage (20) dans l'âme (18) du palier (17) du second élément de réglage (16) est conformé en alésage traversant allongé présentant sur un flanc une denture interne (28) et **en ce que** l'âme (18) du palier (17) du second élément de réglage (16) est aménagé de manière solidaire en rotation sur le premier élément de réglage (12).

2. Dispositif de réglage selon la revendication 1, **caractérisé en ce que** l'élément de commande (23) et l'élément de fixation (22) sont conformés d'un seul tenant (38).

3. Dispositif de réglage selon la revendication 1, **caractérisé en ce que** l'élément de commande (23) est conformé en douille (24) entourant l'élément de fixation (22).

4. Dispositif de réglage selon la revendication 2 ou la revendication 3, **caractérisé en ce que** le premier élément de réglage (12) se présente sous la forme d'un support de palier (36) présentant deux branches de palier (32, 34) avec respectivement une ouverture de passage (14) et l'âme (18) du palier (17) du second élément de réglage (16) est aménagé entre les deux branches de palier (32, 34) du support de palier (36).

5. Dispositif de réglage selon l'une quelconque des revendications 1 à 3, **caractérisé en ce que** l'élément de fixation (22) se présente sous la forme d'un boulon fileté dont la zone dépassant de l'ouverture de passage (14) du premier élément de réglage (12) reçoit un écrou vissé (40).

6. Dispositif de réglage selon la revendication 4, **caractérisé en ce que** l'élément de fixation (22) se présente sous la forme d'un boulon fileté dont la zone dépassant de l'ouverture de passage (14) d'une des branches de palier (32, 34) reçoit un écrou vissé (40).

7. Dispositif de réglage selon la revendication 3, **caractérisé en ce que** l'élément de fixation (22) se présente sous la forme d'un boulon fileté et l'ouverture de passage (14) du premier élément de réglage (12) présente un filet intérieur correspondant pour le vissage du boulon fileté.

8. Dispositif de réglage selon les revendications 3 et 4, **caractérisé en ce que** l'élément de fixation (22) se présente sous la forme d'un boulon fileté et seulement une ouverture de passage (14) présente dans une des deux branches de palier (34, 36) du support de palier (36) un filet intérieur correspondant pour visser le boulon fileté.

9. Dispositif de réglage selon l'une quelconque des revendications précédentes, **caractérisé en ce que** l'élément de commande (23), en considérant la direction axiale (a), est pourvu de la denture externe (26) seulement dans une zone entourée par l'âme (18) du palier (17) du second élément de réglage (16).

10. Dispositif de réglage selon l'une quelconque des revendications précédentes, **caractérisé en ce que** l'élément de commande (23, 24) est pourvu de la denture externe (26) seulement dans une zone périphérique limitée.

11. Dispositif de réglage selon l'une quelconque des revendications précédentes, **caractérisé en ce que** la sécurité en rotation entre l'âme (18) du palier (17) du second élément de réglage (16) et du premier élément de réglage (12) se présente sous la forme d'un guidage parallèle (31).

12. Dispositif de réglage selon l'une quelconque des revendications précédentes, **caractérisé en ce qu'**une surface de préhension mécanique (30) pour un outil de réglage est formée sur l'élément de commande (23).

13. Dispositif de réglage selon l'une quelconque des revendications précédentes, **caractérisé en ce que** l'âme (18) du palier (17) du second élément de réglage (16) se présente sous la forme d'une pièce extrudée.

14. Dispositif de réglage selon la revendication 3, **caractérisé en ce que** la douille (24) se présente sous la forme d'une pièce filée.

15. Dispositif de réglage selon l'une quelconque des revendications précédentes, **caractérisé en ce que** le palier (17) du second élément de réglage (16) se présente sous la forme d'un palier de caoutchouc-métal, d'un joint à rotule, d'une articulation à charnière ou d'un corps rigide présentant un alésage traversant allongé (20).
